# EUROPEAN PATENT APPLICATION

(11) **EP 4 672 436 A1**
(43) Date of publication of application: **31.12.2025**
(21) Application number: 24760231.1
(22) Date of filing: 15.02.2024
(51) Int. Cl.: H01M 50/107, H01M 50/103

(54) **BATTERY, AND METHOD FOR MANUFACTURING BATTERY**

(30) Priority: 21.02.2023 JP 2023025295
(71) Applicant: Panasonic Energy Co., Ltd., Osaka 570-8511 (JP)
(72) Inventor: DAVIS, Jerome, Kadoma-shi, Osaka 571-0057 (JP); KOGANEI, Kazuto, Kadoma-shi, Osaka 571-0057 (JP)
(74) Representative: Eisenführ Speiser
(86) International application number: PCT/JP2024/005156
(87) International publication number: WO 2024/176930

(57) **Abstract**

A battery according to one embodiment of the present invention comprises: an electrode body in which a positive electrode plate and a negative electrode plate are stacked with a separator therebetween; an exterior can (16) which houses the electrode body and has an opening at one end; and a sealing body which closes the opening of the exterior can (16). The exterior can (16) has an identification indication (36) formed on the inner surface thereof.

## Description

### TECHNICAL FIELD

The present disclosure relates to a battery and a method of producing the battery.

### BACKGROUND ART

Conventionally known is a battery provided with an identification mark (for example, see PATENT LITERATURES 1 and 2). The identification mark makes it possible to specify production lines, production date, and the like of the battery. If a failure occurs for some reason in a process of producing a battery or after shipment of a battery, for example, the identification mark is used to analyze a cause of the failure.

PATENT LITERATURE 1 discloses that a two-dimensional code (identification mark) representing identification information is provided at a position at a predetermined distance from a bottom portion on an outer circumferential surface of a battery case (outer housing can). PATENT LITERATURE 2 discloses that a bar code for identification (identification mark) is provided on an outer circumferential surface or an end surface of a can (outer housing can) of a battery.

### CITATION LIST

### PATENT LITERATURE

PATENT LITERATURE 1: Japanese Unexamined Patent Application Publication No. 2011-210663
PATENT LITERATURE 2: Japanese Translation of PCT International Application Publication No. 2015-524142

### SUMMARY

In a case where an identification mark is provided on an outer circumferential surface of an outer housing can of a battery as in the configurations disclosed in PATENT LITERATURES 1 and 2, in producing processes of a battery module including a plurality of batteries, a battery holder, and the like, another component such as the battery holder contacts the outer circumferential surface of the battery, which may cause damage to the identification mark. This may make it difficult to read the identification mark. Alternatively, in a case where an identification mark is provided on an end surface or an outer circumferential surface of an outer housing can of a battery, in the battery module, heat abnormally generated from another battery around the battery having the identification mark affects the outer side surface of the outer housing can of the battery having the identification mark, causing discoloration or deformation of the identification mark, possibly also making it difficult to read the identification mark.

A battery according to the present disclosure comprises an electrode assembly in which a positive electrode plate and a negative electrode plate are stacked with a separator interposed between the positive electrode plate and the negative electrode plate, an outer housing can that houses the electrode assembly, and has an opening at one end of the outer housing can, and a sealing assembly with which the opening of the outer housing can is capped, in which the outer housing can has an identification mark formed on an inner surface of the outer housing can.

A method of producing a battery according to the present disclosure is a method of producing a battery comprising an electrode assembly in which a positive electrode plate and a negative electrode plate are stacked with a separator interposed between the positive electrode plate and the negative electrode plate, an outer housing can that houses the electrode assembly, and has an opening at one end of the outer housing can, and a sealing assembly with which the opening of the outer housing can is capped, in which the outer housing can has an identification mark formed on an inner surface of the outer housing can, the method comprising forming the identification mark by irradiating, with laser light, the outer housing can from outside toward the inner surface.

According to a battery and a method of producing the battery according to the present disclosure, an identification mark is provided, on an inner surface of an outer housing can, at a position which can prevent the identification mark from contacting another component and is unlikely to be affected by heat abnormally generated from another battery around the battery in producing processes of a battery module including the battery. This can make it easy to read the identification mark both after mounting the battery in the battery module and after heat abnormally generated from another battery in the battery module.

### BRIEF DESCRIPTION OF DRAWINGS

FIG. 1 is a diagram schematically illustrating an axial sectional view of a cylindrical battery, which is one example of an embodiment.
FIG. 2 is a top view of an inner surface of a bottom portion of an outer housing can of the cylindrical battery of FIG. 1.
FIG. 3 is a schematic sectional view of the outer housing can when an identification mark is provided on the inner surface of the bottom portion of the outer housing can in the embodiment.
FIG. 4 is a diagram corresponding to FIG. 3, in a cylindrical battery of another example of the embodiment.

### DESCRIPTION OF EMBODIMENTS

Hereinafter, one example of an embodiment of a sealed battery according to the present disclosure will be described in detail with reference to the drawings. The embodiment described below is only an example, and the present disclosure is not limited to the embodiment described below. Forms obtained by selectively combining each component of the embodiment described below are included in the present disclosure.

Hereinafter, as a battery, a cylindrical battery 10 in which a wound electrode assembly 14 is housed in a bottomed cylindrical outer housing can 16 is illustrated, but an outer housing can of the battery is not limited to the cylindrical outer housing can. The battery according to the present disclosure may be, for example, a prismatic battery comprising a rectangular outer housing can. Note that the cylindrical battery 10 of the present embodiment is a secondary battery, but the battery according to the present disclosure may be a primary battery.

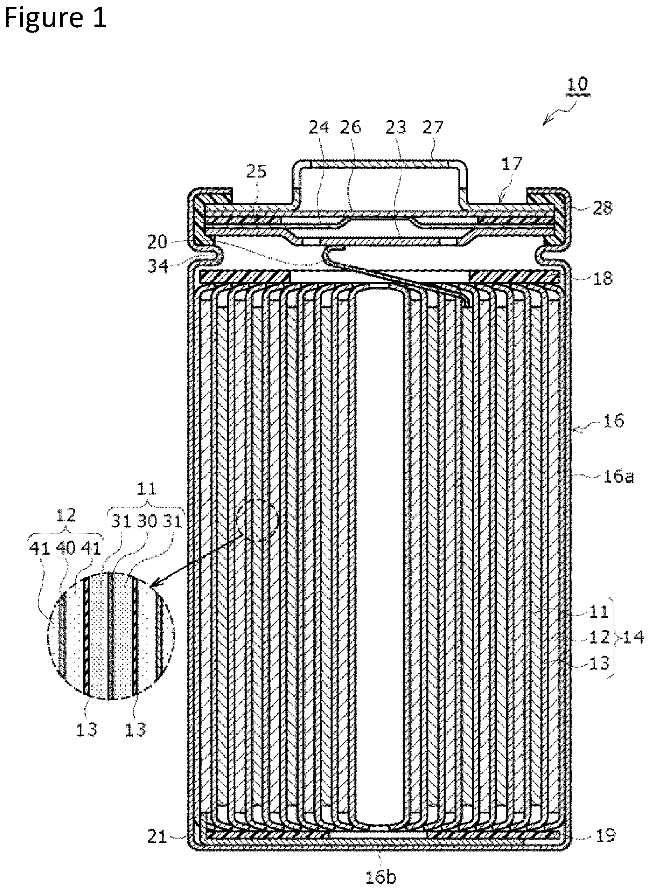

FIG. 1 is a diagram schematically illustrating an axial cross section of the cylindrical battery 10, which is one example of the embodiment. As illustrated in FIG. 1, the cylindrical battery 10 comprises the electrode assembly 14, an electrolyte, and the outer housing can 16 that houses the electrode assembly 14 and the electrolyte. The electrode assembly 14 has a positive electrode plate 11, a negative electrode plate 12, and a separator 13, and has a wound structure in which the positive electrode plate 11 and the negative electrode plate 12 are spirally wound with the separator 13 interposed therebetween. The outer housing can 16 is a bottomed cylindrical metallic container that includes a substantially cylindrical tubular portion 16a in which one side in an axial direction is open, and a bottom portion 16b on the other end of the tubular portion 16a in the axial direction, and an opening of the tubular portion 16a is capped with a sealing assembly 17. Hereinafter, for convenience of description, the sealing assembly 17 side of the cylindrical battery 10 will be described as an "upper side", and a bottom portion 16b side of the outer housing can 16 will be described as a "lower side".

The electrolyte may be an aqueous electrolyte, but a non-aqueous electrolyte shall be used in the present embodiment. The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. For example, as the electrolyte salt, a lithium salt such as LiPF₆ is used.

Any of the positive electrode plate 11, the negative electrode plate 12, and the separator 13 constituting the electrode assembly 14 is a band-shaped elongated member, and spirally wound to be stacked in the radial direction of the electrode assembly 14. The negative electrode plate 12 is formed to be one size larger than the positive electrode plate 11 in order to prevent precipitation of lithium. That is, the negative electrode plate 12 is formed to be longer in the longitudinal direction and the width direction (short direction) than the positive electrode plate 11. The two separators 13 are each formed to be at least one size larger than the positive electrode plate 11, and are disposed so as to interpose the positive electrode plate 11 therebetween.

The positive electrode plate 11 has a positive electrode core 30 and a positive electrode mixture layer 31 formed on each surface of the positive electrode core 30. For the positive electrode core 30, a foil of a metal, such as aluminum or an aluminum alloy, which is stable within a potential range of the positive electrode plate 11, a film in which such a metal is disposed on a surface layer thereof, and the like may be used. The positive electrode mixture layer 31 includes a positive electrode active material, a conductive agent such as carbon black, or a carbon nanotube, and a binder such as polyvinylidene fluoride, and is preferably formed on each surface of the positive electrode core 30. The positive electrode plate 11 may be produced by: applying a positive electrode mixture slurry including the positive electrode active material, the conductive agent, and the binder on each surface of the positive electrode core 30; and compressing the resulting coating film.

Examples of the positive electrode active material included in the positive electrode mixture layer 31 include a lithium-transition metal composite oxide. The lithium-transition metal composite oxide is a composite oxide containing metal elements such as Co, Mn, Ni, and Al in addition to Li. A metal element contained in the composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these elements, at least one selected from Ni, Mn, and Co is preferably contained.

The negative electrode plate 12 has a negative electrode core 40 and a negative electrode mixture layer 41 formed on each surface of the negative electrode core 40. For the negative electrode core 40, a foil of a metal, such as copper or a copper alloy, which is stable within a potential range of the negative electrode plate 12, a film in which such a metal is disposed on a surface layer thereof, and the like may be used. The negative electrode mixture layer 41 includes a negative electrode active material, a binder, and, as necessary, a conductive agent such as carbon black or a carbon nanotube, and is preferably formed on each surface of the negative electrode core 40. For the binder, for example, a styrene-butadiene rubber (SBR) may be used, and carboxymethyl cellulose or a salt thereof, or the like may be used in combination therewith. The negative electrode plate 12 may be produced by: applying a negative electrode mixture slurry including the negative electrode active material and the binder on each surface of the negative electrode core 40; and compressing the resulting coating film.

Examples of the negative electrode active material included in the negative electrode mixture layer 41 include carbon materials such as graphite that reversibly occlude and release lithium ions. The graphite may be any of natural graphite and artificial graphite. For the negative electrode active material, an element that forms an alloy with Li such as Si and Sn, and a material containing the element may be used. Among them, a composite material containing Si is preferably used. A preferable example of the composite material containing Si includes a material including a fine Si phase dispersed in an SiO₂ phase, a silicate phase such as lithium silicate, a carbon phase, or a silicide phase.

For the separator 13, a porous sheet having ion permeability and an insulation property is used. Specific examples of the porous sheet include a microporous thin film, a woven fabric, and a nonwoven fabric. Suitable examples of a material for the separator 13 include a polyolefin such as polyethylene or polypropylene, or a cellulose. The separator 13 may have either a single-layer structure or a multi-layer structure. The separator 13 may have a high heat resistant resin layer such as aramid resin formed on its surface. At least one of interfaces between the separator 13 and the positive electrode plate 11 and between the separator 13 and the negative electrode plate 12 may have a filler layer that contains an inorganic filler.

Insulating plates 18 and 19 are disposed on the upper and lower sides of the electrode assembly 14, respectively. In the example illustrated in FIG. 1, a positive electrode lead 20 extends toward the sealing assembly 17 through a through hole in the insulating plate 18, and a negative electrode lead 21 extends toward the bottom portion 16b side of the outer housing can 16 through the outside of the insulating plate 19. The positive electrode lead 20 is connected to a lower surface of an internal terminal plate 23 of the sealing assembly 17, by means of laser welding or the like, and a cap 27 which is a top plate of the sealing assembly 17 electrically connected to the internal terminal plate 23 serves as a positive electrode terminal. The negative electrode lead 21 is connected to an inner surface of the bottom portion 16b of the outer housing can 16, by means of laser welding or the like, and the outer housing can 16 serves as a negative electrode terminal.

The positive electrode lead 20 is joined to the positive electrode core 30, by means of ultrasonic welding or the like. The positive electrode lead 20 is joined to a longitudinal center portion away from both ends of the positive electrode plate 11 in the longitudinal direction, for example. The positive electrode lead 20 may be joined to a position that is substantially equally distant from both ends of the positive electrode plate 11 in the longitudinal direction. The negative electrode lead 21 is joined to the negative electrode core 40, by means of ultrasonic welding or the like. In the example illustrated in FIG. 1, the negative electrode lead 21 is joined to a winding finish side end portion which is an end portion of the negative electrode plate 12 in the longitudinal direction that is located on an outer circumferential side of the electrode assembly 14. The positive electrode lead 20 and the negative electrode lead 21 each are, for example, a band-shaped metallic member, and have a thickness of greater than or equal to 30 µm and less than or equal to 100 µm.

The negative electrode plate 12 may be disposed on the outer circumferential surface of the electrode assembly 14. In addition, an exposed portion where a surface of the negative electrode core 40 is exposed may be formed on the outer circumferential surface of the electrode assembly 14, and the exposed portion may contact an inner surface of the outer housing can 16 so that the negative electrode plate 12 and the outer housing can 16 are electrically connected to each other. In this case, the negative electrode plate 12 need not have the negative electrode lead 21.

The outer housing can 16 is a bottomed cylindrical metallic container in which one side in an axial direction is open, as described above. A gasket 28 is provided between the outer housing can 16 and the sealing assembly 17 to achieve the sealability inside the battery and the insulation property between the outer housing can 16 and the sealing assembly 17. The outer housing can 16 has a grooved portion 22 for supporting the sealing assembly 17 formed in an upper portion thereof, the grooved portion 22 being formed by a part of the tubular portion 16a projecting inward. The grooved portion 22 is preferably formed in an annular shape along a circumferential direction of the outer housing can 16 and supports the sealing assembly 17 on an upper surface of the grooved portion 22. The sealing assembly 17 is fixed to the upper portion of the outer housing can 16 by the grooved portion 22, and an opening end portion of the outer housing can 16 is crimped and fixed to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective center portions, and the insulating member 25 is interposed between the circumferential edge portions of the vent members 24 and 26. If an abnormality occurs in the battery and the internal pressure of the battery increases, the lower vent member 24 is deformed to push up the upper vent member 26 toward the cap 27 side and breaks, resulting in cutting off of a current pathway between the lower vent member 24 and the upper vent member 26. If the internal pressure further increases, the upper vent member 26 breaks, and gas is discharged through an opening of the cap 27.

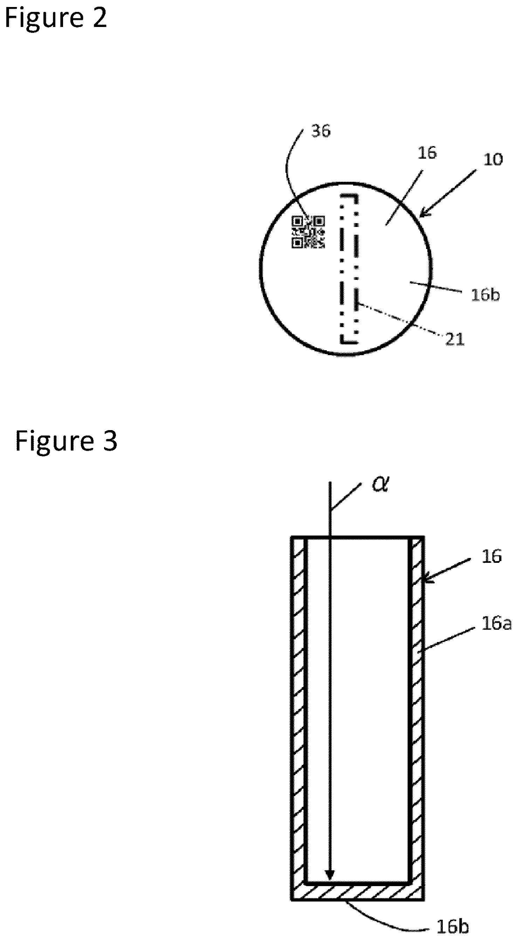

FIG. 2 is a top view of an inner surface of the bottom portion 16b of the outer housing can 16 of the cylindrical battery 10. As illustrated in FIG. 2, the outer housing can 16 has an identification mark 36 formed on the inner surface of the disk-shaped bottom portion 16b. The identification mark 36 is formed at a position apart from a center of the inner surface of the bottom portion 16b so as to avoid a position of contact between the inner surface of the bottom portion 16b and the negative electrode lead 21.

The identification mark 36 is an individual mark attached to the cylindrical battery 10, and provides identification information for differentiating it from another cylindrical battery 10. The identification marks 36 are provided to be different for each of the cylindrical batteries 10 or for each group including a predetermined number of cylindrical batteries 10. The identification mark 36 may indicate a lot number assigned to a group of products that are produced at the same timing or may indicate a product number assigned to each product.

The identification marks 36 can differentiate among individual cylindrical batteries 10 or individual production lots, and are used to acquire the information about the production of the cylindrical battery 10. For example, a producer of a cylindrical battery 10 has a database including the information about the production of the cylindrical battery 10, the information being associated with the identification mark 36 of the cylindrical battery 10. Therefore, the identification mark 36 is read by a reading device such as a reader to specify the cylindrical battery 10, thereby making it possible to acquire the information about the production of the cylindrical battery 10. Examples of the information about the production of the cylindrical battery 10 include production process history records including the information such as a production line and production date.

The identification mark 36 is formed of at least one selected from numbers, characters, and identification codes, for example. The identification mark 36 may be a mark formed of a combination of numbers and characters. The identification code included in the identification mark 36 may be any of a one-dimensional code, a two-dimensional code, and a three-dimensional code, but is preferably a two-dimensional code. In the example illustrated in FIG. 2, a square two-dimensional code (QR code (registered trademark)) is formed as the identification mark 36.

It is sufficient that the identification mark 36 is readable using the reading device such as a reader, or the identification mark 36 may be formed of at least one selected from a protrusion and a recess. Alternatively, the identification mark 36 has a different color from the surrounding area. The numbers, characters, or identification codes forming the identification mark 36 have no protrusion or recess, and only the color thereof may be different from the surrounding color.

The identification mark 36 may be formed by pressing, and is preferably formed by laser marking. The laser marking is a method of forming a mark by irradiating a portion of the mark to be formed with laser light. In a case where the identification mark 36 is formed by laser marking, a portion irradiated with laser light is discolored to form the mark, for example. In addition, a recess may be formed in the portion irradiated with laser light. Since the mark formed by laser marking is excellent in durability, a reading error is hard to occur even after the use of the cylindrical battery 10.

FIG. 3 is a schematic sectional view of the outer housing can 16 when the identification mark 36 is provided on the inner surface of the bottom portion 16b of the outer housing can 16 in the embodiment. As illustrated in FIG. 3, in a method of producing a battery of the embodiment, in a case where an identification mark is formed on the inner surface of the bottom portion 16b, the laser light is emitted from a laser irradiation device (not illustrated) disposed above and outside the outer housing can 16 to a lower side in the vertical direction (a direction of an arrow α in FIG. 3) toward the inner surface of the bottom portion 16b in a state in which the interior of the outer housing can 16 is emptied and the tubular portion 16a of the outer housing can 16 extends to the tip into a cylindrical shape before being deformed by crimping. Thus, the identification mark 36 (FIG. 2) is formed on the inner surface of the bottom portion 16b.

In a case where the identification mark 36 is formed by thus emitting the laser light to the inner surface of the bottom portion 16b, a blur or deformation can be prevented from occurring in the identification mark 36 because of an influence of an electrolytic solution. This makes it possible to increase the reading accuracy of the identification mark 36. Even though the identification mark 36 is formed on the inner surface of the bottom portion 16b which is located at a deep position of the narrow outer housing can 16, the identification mark 36 can be formed with high accuracy and easily by irradiation of the laser light. In a case where the identification mark 36 is formed on the inner surface of the bottom portion 16b, the portion of the identification mark 36 to be formed is likely to form a flat surface substantially perpendicular to a laser irradiation direction. This surface makes it possible to form the identification mark 36 with high accuracy.

According to the above-described cylindrical battery 10 and method of producing the cylindrical battery 10, the identification mark 36 is provided, on the inner surface of the outer housing can 16, at a position which can prevent the identification mark 36 from contacting another component and is unlikely to be affected by heat abnormally generated from another cylindrical battery around the cylindrical battery 10 in producing processes of a battery module including the cylindrical battery 10. The inner surface of the outer housing can 16 is unlikely to be affected by the heat of another cylindrical battery around the cylindrical battery 10 as compared with the outer surface of the outer housing can 16. This can make it easy to read the identification mark 36 both after mounting the cylindrical battery 10 in the battery module and after heat abnormally generated from another cylindrical battery in the battery module.

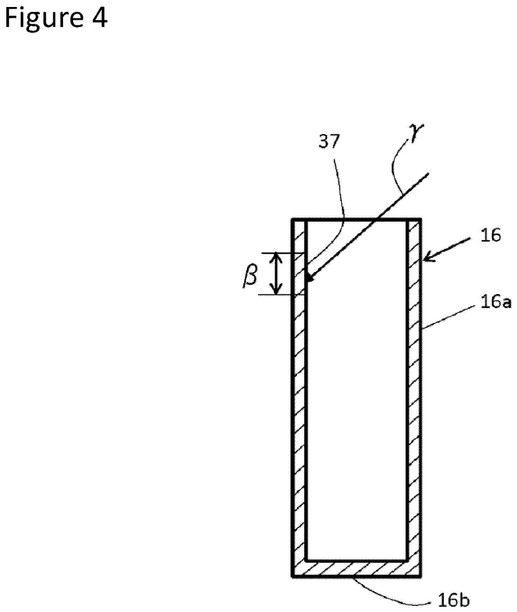

FIG. 4 is a diagram corresponding to FIG. 3, in a cylindrical battery of another example of the embodiment. In the configuration of this example, an identification mark 37 is provided on an inner surface of a tubular portion 16a of an outer housing can 16. In FIG. 4, a range indicated by an arrow β indicates a range in which the identification mark 37 is formed in the tubular portion 16a. As illustrated in FIG. 4, the identification mark 37 is preferably provided on an upper portion on the inner surface of the tubular portion 16a. The identification mark 37 is formed by, for example, laser marking. For example, as illustrated in FIG. 4, in a method of producing a battery of the embodiment, in a case where an identification mark is formed on the inner surface of the tubular portion 16a, the laser light is emitted from a laser irradiation device (not illustrated) disposed above and outside the outer housing can 16 to an obliquely lower side with respect to the vertical direction (a direction of an arrow γ in FIG. 4) toward the inner surface of the tubular portion 16a in a state in which the interior of the outer housing can 16 is emptied and the tubular portion 16a of the outer housing can 16 extends to the tip into a cylindrical shape before being deformed by crimping. Thus, the identification mark 37 is formed on the inner surface of the tubular portion 16a.

Also in the configuration of this example, the identification mark 37 is provided on the inner surface of the outer housing can 16, similar to the configuration in FIGS. 1 to 3. This can make it easy to read the identification mark 37 both after mounting the cylindrical battery in the battery module and after heat abnormally generated from another cylindrical battery in the battery module. In this example, the other configurations and functions are similar to the configuration in FIGS. 1 to 3.

### REFERENCE SIGNS LIST

10 Cylindrical battery, 11 Positive electrode plate, 12 Negative electrode plate, 13 Separator, 14 Electrode assembly, 16 Outer housing can, 16a Tubular portion, 16b Bottom portion, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 36, 37 Identification mark

## Claims

1. A battery, comprising:
an electrode assembly in which a positive electrode plate and a negative electrode plate are stacked with a separator interposed between the positive electrode plate and the negative electrode plate;
an outer housing can that houses the electrode assembly, and has an opening at one end of the outer housing can; and
a sealing assembly with which the opening of the outer housing can is capped, wherein
the outer housing can has an identification mark formed on an inner surface of the outer housing can.

2. The battery according to claim 1, wherein
the identification mark is formed on an inner surface of a bottom portion of the outer housing can.

3. A method of producing a battery comprising:
an electrode assembly in which a positive electrode plate and a negative electrode plate are stacked with a separator interposed between the positive electrode plate and the negative electrode plate;
an outer housing can that houses the electrode assembly, and has an opening at one end of the outer housing can; and
a sealing assembly with which the opening of the outer housing can is capped, wherein
the outer housing can has an identification mark formed on an inner surface of the outer housing can,
the method comprising forming the identification mark by irradiating, with laser light, the outer housing can from outside toward the inner surface.
